# EUROPEAN PATENT SPECIFICATION

(11) **EP 0 421 692 B1**
(45) Date of publication and mention of the grant of the patent: **26.04.1995**
(21) Application number: 90310684.7
(22) Date of filing: 28.09.1990
(51) Int. Cl.: G11B 5/00, G11B 5/187, G11B 5/245, G11B 5/09

(54) **Magnetic data storage apparatus**
Magnetisches Datenspeichergerät
Appareil de stockage de données magnétiques

(30) Priority: 05.10.1989 JP 258970/89
(43) Date of publication of application: 10.04.1991
(73) Proprietor: International Business Machines Corporation, Armonk, N.Y. 10504 (US)
(72) Inventor: Ogasawara, Kenji, Machida-shi, Tokyo-to (JP); Kurachi, Koji, Yokohama-shi, Kanagawa-Ken (JP); Tobari, Atushi, Fujisawa-shi, Kanagawa-ken (JP)
(74) Representative: Moss, Robert Douglas

(56) References cited:
- US-A- 3 671 681
- US-A- 4 398 229
- PATENT ABSTRACTS OF JAPAN vol. 12, no. 280 (P-739)(3127) 2 August 1988
- PATENT ABSTRACTS OF JAPAN vol. 10, no. 160 (P-465)(2216) 7 June 1986
- PATENT ABSTRACTS OF JAPAN vol. 9, no. 323 (P-414)(2046) 18 December 1985

## Description

### Technical Field of the Invention

The present invention relates to a magnetic data storage apparatus and, in particular, to magnetic heads employed therein.

### Background of the invention

In recent years, the volume of data handled by office automation equipment such as computers has increased significantly. Accordingly, there is a strong demand for high-density recording on magnetic discs commonly used as the media for storing such data.

It is generally known that one way of achieving higher density recording is to narrow the clock window width. However, in digital system equipment the minimum achievable width is limited by the requirement to achieve an error rate not greater than, for example, 10 ⁻⁸.

Errors result from narrowing the clock window width when the detected read pulses are incorrectly located with respect to the clock window. Sources of this misalignment of pulse and window are the shift in pulse peak caused by interference between adjacent pulses and distortion introduced by the signal processing circuit. It is therefore necessary to have sufficient window width to cope with peak shift.

Various techniques have so far been proposed for eliminating the distortion caused by the signal processing circuit and by the interference between adjacent pulses on a recording medium. Even with these prior techniques the distortion of the read signal is still an obstacle to achieving ever higher density recording.

One source of the distortion has been found to lie within the magnetic head device. A tensile stress is produced in the gap portion of the head, which is caused by the difference between the thermal expansion coefficients of the non-magnetic substance such as glass constituting the gap portion and the magnetic substances such as ferrite sandwiching that gap portion from both sides. This tensile stress causes a reverse magnetostriction effect in the magnetic substances, inducing strong anisotropy in the neighbourhood of the gap portion of the magnetic substances. This anisotropy generates the distortion of the read signal. JP-A-6358608 discloses a magnetic data storage apparatus in which a bias field is generated in the head body during writing to increase the gap width by the magnetostriction effect. Claim 1 is characterised against this document. Systems which alter the width of the gap using the piezoelectric effect are also known from US-A-4,398,229.

### Disclosure of the Invention

The present invention seeks to solve the problem of read signal distortion and accordingly provides magnetic data storage apparatus as laid down in claim 1.

In a preferred magnetic head device, the d.c. bias magnetic field is generated by causing a direct current of a predetermined value to flow in an additional coil wound around the magnetic body, the additional coil being separate from the coil used for generating the read signal.

In an alternative embodiment, the dc bias magnetic field is generated by merely causing a direct current of a predetermined value to flow in the same coil used for generating the read signal.

If a d.c. bias magnetic field is generated in the magnetic body in accordance with the present invention, a magnetostriction effect is produced in the magnetic body sandwiching the gap portion from both sides, thereby compressing the gap portion. This compression of the gap portion acts to cancel the tensile stress caused in the gap portion by the difference in thermal expansion coefficients as described above. Accordingly, no reverse magnetostriction effect is produced in the magnetic substances and also no anisotropy is induced, so that the distortion of the read signal can be suppressed.

Embodiments of the invention will now be described, by way of example only, with reference to the accompanying drawings.

### Brief Description of the Drawings:

Figure 1 shows schematically the construction of a magnetic head employed in magnetic data storage apparatus according to the present invention;
Figure 2 shows schematically a conventional magnetic head which may be employed in magnetic data storage apparatus according to a second embodiment of the present invention; and
Figure 3 is a graph showing the reduction in signal distortion achieved employing heads in apparatus according to the present invention.

### Detailed Description of the Invention

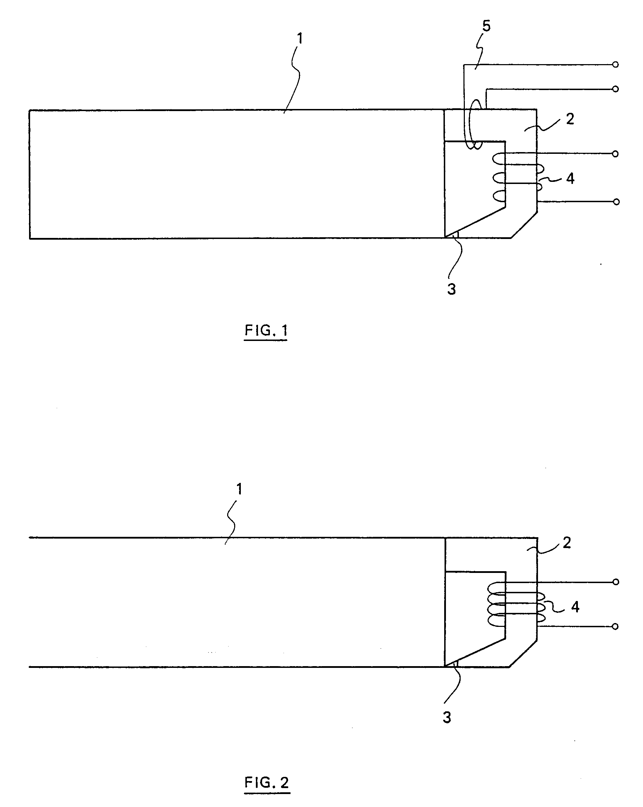

In the magnetic head device shown in figure 1, a gap portion 3 of a very small width consisting of a non-magnetic substance such as glass is provided between magnetic portions 1 and 2 having a positive magnetostriction constant, such as ferrite.

A read/write coil 4 used for generating a read signal and for introducing a write signal is wound around one magnetic portion 2. In addition, a d.c. bias magnetic field coil 5 is wound around magnetic portion 2 for generating a d.c. bias field in the magnetic portions 1 and 2.

When a read signal is read out from the read/write coil 4, a d.c. bias magnetic field is generated in the magnetic portions 1 and 2 by causing a d.c. current of a predetermined value to flow in the d.c. bias magnetic field coil 5. The value of the d.c. current to flow in the d.c. bias magnetic field coil 5 is preferably 0.5 mA when the value of the a.c. current of the read signal which is read out from the read/write coil 4 is 40 to 60 mA.

In this embodiment, a d.c. bias magnetic field is generated in the magnetic portions 1 and 2 as described above, so a magnetostriction effect is caused between the magnetic portions 1 and 2 sandwiching the gap portion 3 from both sides. This causes the gap portion 3 to be compressed, and the tensile stress due to the difference of the thermal expansion coefficients of the gap portion 3 and the magnetic portions 1 and 2 is cancelled. Therefore, no reverse magnetostriction effect is generated in the magnetic portions 1 and 2 and no anisotropy is induced, whereby the distortion of the read signal can be suppressed. As a result, the error rate improves by one or two orders as compared with the prior techniques, or for the same error rate the storage capacity increases by 10%.

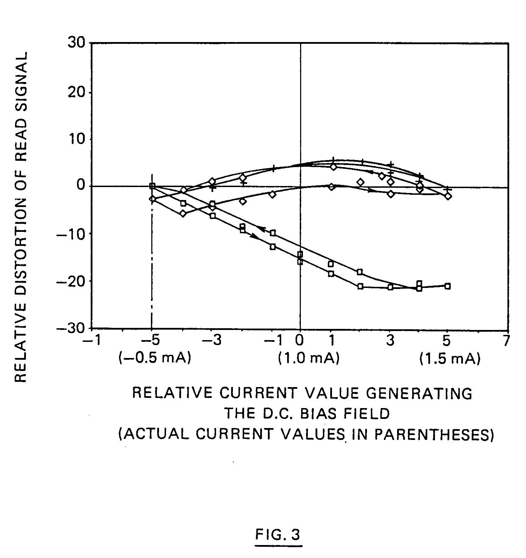

Figure 2 shows the construction of the magnetic head device in accordance with a second embodiment of the invention.

The magnetic head device, of Fig. 2 which is similar to the magnetic head device shown in Figure 1, comprises a gap portion 3 provided between magnetic portions 1 and 2, and a read/write coil 4 wound around one magnetic portion 2.

However, there is no d.c. bias magnetic field coil 5, instead, when a read signal is read out from the read/write coil 4, a d.c. bias magnetic field is generated in the magnetic portions 1 and 2 by causing a d.c. current (offset current) of a predetermined value to flow in the read/write coil 4. The value of the d.c. current made to flow in the read/write coil 4 is similar to the embodiment shown in Figure 1.

The effect of this embodiment is similar to that of the embodiment shown in Figure 1, and moreover, there is an advantage that, without effecting a design modification to the conventional magnetic head device, the present invention can be applied only with a simple modification being made to the circuit system.

Fig. 3 shows the result of the measurement of the correlation between the current value producing the d.c. bias magnetic field in the magnetic head device and the distortion of the read signal and clearly indicates the beneficial effects of the invention.

The line defined by the (+) symbols represents experimental results using a magnetic head device in which the distortion due to the interference between adjacent pulses on the recording medium is relatively small when there is no d.c. bias magnetic field, the line defined by open squares represents experimental results using a magnetic head device in which this distortion is large when there is no d.c. bias magnetic field, and the line defined by open diamond symbols represents experimental results using a magnetic head device in which there is no such distortion when there is no d.c. bias magnetic field.

As seen from this figure when the current value generating the d.c. bias magnetic field is -0.5 mA, the distortion of each of the read signals is approximately 0ns. At the same time, since the current value generating the d.c. bias magnetic field is smaller than 1 mA, there is no problem of any adverse effect caused by this current.

In addition, it has been experimentally determined that the polarity of the current generating the d.c. bias magnetic field may be either positive or negative.

## Claims

1. Magnetic data storage apparatus having a magnetic head for reading data stored as changes of magnetisation on a magnetisable record medium, the head comprising:
a magnetic body (1, 2);
a gap member (3) of non-magnetic material interposed in the magnetic body, and
a coil (4) wound around the magnetic body in which read signals are generated from data stored on said record medium;
wherein the apparatus further comprises means (5) for generating a bias magnetic field in the magnetic body to produce dimensional changes by magnetostriction characterised in that said bias magnetic field generating means generates said bias magnetic field during generation of the read signal such as to produce dimensional changes in the magnetic body by magnetostriction which oppose dimensional changes resulting from thermal expansion arising from different thermal expansion coefficients of the magnetic body and the gap member respectively.

2. Apparatus as claimed in claim 1 wherein the bias field generating means includes a source of direct current connected to flow around the magnetic body during generation of the read signal.

3. Apparatus as claimed in claim 2 wherein the direct current source is connected to said coil in which read signals are generated.

4. Apparatus as claimed in claim 2 in which the bias field generating means includes an additional coil (5) wound around the magnetic body, the direct current source being connected to said additional coil.

5. Apparatus as claimed in any preceding claim in which the magnetic body has a positive magnetostriction constant.

## Patentansprüche

1. Ein magnetisches Datenspeichergerät mit einem Magnetkopfzum Lesen von Daten, die als Veränderungen der Magnetisierung auf einem magnetisierbaren Aufzeichnungsmedium gespeichert sind, wobei der Kopf umfaßt:
einen magnetischen Körper (1, 2);
ein Spaltglied (3) aus nichtmagnetischen Material zwischen dem magnetischen Körper, und
eine um den magnetischen Körper gewickelte Spule (4), in der Lesesignale aus den Daten erzeugt werden, die auf dem Aufzeichnungsmedium gespeichert sind,
wobei das Gerät ferner ein Mittel (5) zur Erzeugung eines Vormagnetisierungsfeldes in dem magnetischen Körper zum Erzeugen von Größenänderungen durch Magnetostriktion umfaßt, dadurch gekennzeichnet, daß das Mittel zur Erzeugung des Vormagnetisierungsfeldes das Vormagnetisierungsfeld während der Erzeugung des Lesesignals erzeugt, etwa um in dem magnetischen Körper durch Magnetostriktion Größenänderungen zu erzeugen, die den Größenänderungen entgegenwirken, die durch die Wärmeausdehnung entstehen, welche sich durch die unterschiedlichen Wärmeausdehnungskoeffizienten des magnetischen Körpers und des Spaltglieds ergibt.

2. Ein Gerät nach Anspruch 1, bei dem das Mittel zur Erzeugung des Vormagnetisierungsfeldes eine Gleichstromquelle enthält, die so angeschlossen ist, daß der Gleichstrom während der Erzeugung des Lesesignals um den magnetischen Körper herumfließt.

3. Ein Gerät nach Anspruch 2, bei dem die Gleichstromquelle an die Spule angeschlossen ist, in der die Lesesignale erzeugt werden.

4. Ein Gerät nach Anspruch 2, bei dem das Mittel zur Erzeugung des Vormagnetisierungsfeldes eine zusätzliche Spule (5) enthält, die um den magnetischen Körper gewickelt ist, wobei die Gleichstromquelle an die zusätzliche Spule angeschlossen ist.

5. Ein Gerät nach einem beliebigen obigen Anspruch, bei dem der magnetische Körper eine positive Magnetostriktionskonstante aufweist.

## Revendications

1. Appareil magnétique de stockage de données comportant une tête magnétique pour lire des données stockées sous la forme de variations d'aimantation sur un support d'enregistrement magnétisable, la tête comprenant:
un corps magnétique (1, 2);
un élément d'entrefer (3) en matériau non magnétique interposé dans le corps magnétique, et
un bobinage (4) enroulé autour du corps magnétique dans lequel des signaux de lecture sont générés à partir de données stockées sur ledit support d'enregistrement;
dans lequel l'appareil comprend en outre un moyen (5) pour générer un champ magnétique de polarisation dans le corps magnétique pour produire des changements de dimensions par magnétostriction caractérisé en ce que ledit moyen de génération de champ magnétique de polarisation génère ledit champ magnétique de polarisation au cours de la génération du signal de lecture de manière à produire des changements de dimensions dans le corps magnétique par magnétostriction qui s'opposent aux changements de dimensions résultant de la dilatation thermique se produisant à partir de coefficients différents de dilatation thermique du corps magnétique et de l'élément d'entrefer respectivement.

2. Appareil selon la revendication 1 dans lequel le moyen de génération de champ de polarisation comporte une source de courant continu connectée pour circuler autour du corps magnétique au cours de la génération du signal de lecture.

3. Appareil selon la revendication 2 dans lequel la source de courant continu est connectée audit bobinage dans lequel sont générés les signaux de lecture.

4. Appareil selon la revendication 2 dans lequel le moyen de génération de champ de polarisation comporte un bobinage supplémentaire (5) enroulé autour du corps magnétique, la source de courant continu étant connectée audit bobinage supplémentaire.

5. Appareil selon l'une quelconque des revendications précédentes dans lequel le corps magnétique a une constante de magnétostriction positive.
